(19) Europäisches Patentamt
European Patent Office
Office européen des brevets

(11) Numéro de publication: 0 018 886
B1

(12) **FASCICULE DE BREVET EUROPEEN**

(45) Date de publication du fascicule du brevet: 09.02.83

(51) Int. Cl.³: C 08 K 5/00, C 08 L 27/06

(21) Numéro de dépôt: 80400527.0

(22) Date de dépôt: 18.04.80

(54) **Composition stabilisante à base d'un composé tétramercapto-stannique et d'un éther-couronne pour résines vinyliques.**

(30) Priorité: 04.05.79 FR 7911284

(43) Date de publication de la demande:
12.11.80 Bulletin 80/23

(45) Mention de la délivrance du brevet:
09.02.83 Bulletin 83/6

(84) Etats contractants désignés:
BE CH DE GB IT LI LU NL SE

(56) Documents cités:
FR - A - 2 162 456
FR - A - 2 322 893
US - A - 3 845 017

Le dossier contient des informations techniques présentées postérieurement au dépôt de la demande et ne figurant pas dans le présent fascicule.

(73) Titulaire: SOCIETE NATIONALE ELF AQUITAINE
Tour Aquitaine
F-92400 Courbevoie (FR)

(72) Inventeur: Foure, Michel
Route Nationale 117
F-64170 Artix (FR)

(74) Mandataire: Kohn, Armand et al,
5 Avenue Foch
F-92380 Garches (FR)

EP 0 018 886 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

# Composition stabilisant à base d'un composé tétramercapto-stannique et d'un éther-couronne pour résines vinyliques

L'invention se rapporte à la stabilisation de résines vinyliques par l'adjonction d'un ou de plusieurs composés organo-stanniques; elle vise notamment à l'amélioration de l'effet stabilisant, vis-à-vis de la chaleur. L'invention comprend une composition stabilisante, qui contient à la fois un dérivé organique de l'étain, et plus particulièrement un composé tétramercapto-stannique, ainsi qu'un adjuvant pour améliorer l'action du composé stannique; cette composition peut d'ailleurs renfermer d'autres stabilisants, connus.

Des adjuvants à base de dérivés organiques de l'étain sont couramment employés pour la stabilisation de résines vinyliques, et plus spécialement de résines renfermant de l'halogène, comme c'est le cas du chlorure de polyvinyle employé à très grande échelle dans l'industrie. Depuis que ces stabilisants sont expérimentés, des choix ont dû être opérés, car l'effet inhibiteur de la décomposition de la matière plastique halogénée varie sensiblement avec la composition du dérivé de l'adjuvant stannique. Ainsi, alors que certains mercapto, notamment ceux dans lesquels un ou deux atomes de soufre sont liés à l'atome d'étain, des alkyles ou autres groupes étant échangés avec les autres valences de l'étain, donnent de bons résultats, des difficultés surgissent lorsque le stabilisant est un tétramercapto-étain; on constate, en effet, qu'avec des tétramercapto-étains, les résultats sont souvent décevants, la couleur initiale de la résine étant généralement excellente, on assiste à l'apparition brutale d'une coloration foncée que rien ne laissait prévoir, après un temps de chauffage relativement court. Aussi les tétramercapto-étains, en tant que stabilisants du chlorure de polyvinyle, n'ont été préconisés qu'à une époque déjà assez lointaine: tel est le cas par exemple des brevets US 2 479 918, 2 726 227 et 2 888 435 ou du brevet allemand 1 008 908. L'inconvénient précité ayant été reconnu par les industriels, on a cherché à y remédier par l'addition d'autres adjuvants, comme par exemple celle d'acide gluconique, lactique, tartrique ou éthylène-diaminotétracétique, de polyols, de polyamines ou d'organo-phosphites, aux tétramercapto-étains ou aux tétracarboxylates d'étain, selon le brevet allemand 2 538 409. Cependant, on n'est pas arrivé jusqu'à présent à rendre les tétramercapto-étains vraiment utilisables avec succès, et l'on a généralement recours à d'autres composés stanniques, notamment des mono-, di- ou tri-mercapto, qui—d'ailleurs—ne donnent pas toujours non plus entière satisfaction.

Le fait de ne pas pouvoir employer les tétramercapto-étains est tout à fait regrettable, parce que ces substances sont beaucoup plus faciles à préparer que les autres dérivés stanniques; leur formation n'exige pas d'application coûteuse de réaction, telle synthèse de Grignard, méthode de Wurtz, synthèse aluminique, etc. Or, la présente invention permet d'utiliser, avec succès, des tétramercapto-étains. L'invention apporte ainsi l'avantage technique d'une meilleure stabilisation et un gain économique par la possibilité de l'emploi de tétramercapto-étains de préparation plus aisée.

Le nouveau procédé, suivant l'invention, est caractérisé en ce qu'il consiste à ajouter, à la résine à stabiliser, un ou plusieurs éthers-couronne, en plus d'un ou de plusieurs stabilisants à base de tétramercapto-étain.

La nouvelle composition, suivant l'invention, pour la réalisation de ce procédé, est donc constituée par un mélange d'au moins un composé tétramercapto-stannique avec au moins un éther-couronne.

Le terme éther-couronne est employé ici dans le sens que lui a donné C. J. Pedersen (J. Amer. Chem. Soc. 1967—89—7017—1967, 89,2495) pour désigner les polyéthers cycliques, dont quelques exemples de formules sont donnés plus loin. Pour les structures contenant de l'azote, on se référera à l'article de J. J. Christensen "The Synthesis and Ion Binding of Synthetic Multidentate Macrocyclic Compounds" (Chemical Reviews, 1976, Vol 74, n° 3, p 353 et suivantes).

Les éthers-couronne sont connus comme agents complexants pour synthèse organique, mais rien ne permettait de penser, jusqu'à présent, qu'ils seraient susceptibles d'améliorer l'effet stabilisant des tétramercapto-étains dans les polymères vinyliques en particulier halogéno-vinyliques. C'est d'une façon tout à fait inattendue que la demanderesse a découvert l'efficacité de ces éthers spéciaux, dans cette application. Il est possible que, grâce à leur pouvoir complexant, les éthers-couronne bloquent l'acide de Lewis, c'est-à-dire le tétrahalogénure d'etain, qui se forme probablement lorsqu'une résine halogéno-vinylique, contenant un composé stannique, est soumise à l'action de la chaleur, Peut-être bloquent-ils, par exemple, le $SnCl_4$ qui pourrait être responsable du brunissement de la résine, lorsque le stabilisant employé est un tétramercapto-étain: ce n'est là qu'une hypothèse sans aucune incidence sur le mérite de l'invention. En effet, aucune donnée de la technique antérieure ne pouvait faire prévoir que la présence d'un éther-couronne améliorerait l'action stabilisante des tétramercapto-étains.

Des tétramercapto-étains sont connus dans l'art, il n'y a donc pas lieu de les décrire ici. On notera seulement que conviennent particulièrement à la réalisation de l'invention ceux dont la composition correspond à la formule:

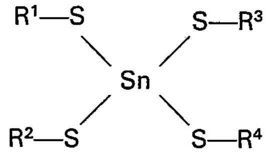

dans laquelle chacun des symboles $R^1$ à $R^4$ peut désigner un alkyle, cycloalkyle, aryle, alkaryle ou un groupe ester aliphatique du type:

$$R—COO—(CH_2)_n—$$

ou

$$R—OOC—(CH_2)_n—$$

où R peut être en $C_1$ à $C_{20}$, mais surtout en $C_6$ à $C_{18}$, tandis que n est de 1 à 6, et de préférence de 1 à 3.

Le nombre d'atomes de carbone dans les groupes $R^1$ à $R^4$ est de 1 à 24, et le plus souvent de 6 à 20. Ainsi, par exemple, un ou plusieurs de ces groupes sont des octyles, des dodécyles, des octadécyles, etc. des méthylène-carboxylates d'isooctyle,

$$—CH_2COO—C_8H_{17}$$

des palmitoyl oxy-2 éthyle

$$C_{15}H_{31}COO—CH_2CH_2—$$

ou similaires.

Les résines renfermant un halogène, auxquelles s'applique l'invention, peuvent être des homopolymères, comme par exemple chlorure de polyvinyle, chlorure de polyvinylidène, polychlorotrifluoroéthylène, polytétra-fluoroéthylène, polyéther chloré, polydichloro-styrène, etc., des copolymères tels que acétochlorure de polyvinyle ou autres, ou bien des combinaisons ou mélanges divers, par exemple des chlorures de polyvinyle modifiés par de l'éthylène ou/et du propylène, par de l'acrylonitrile-butadiène-styrène, de l'éthylène-acétate de vinyle et similaires.

En ce qui concerne les éthers-couronne utilisables suivant l'invention, ils peuvent être représentés par la formule générale:

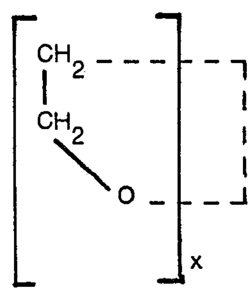

où x désigne un nombre entier au moins égal à 4. Un ou plusieurs atomes d'oxygène peuvent être remplacés par des atomes de soufre ou/et par des atomes d'azote.

Il est d'usage de désigner les éthers-couronne par deux chiffres placés avant et après la lettre C, notamment n-C— n' où n désigne le nombre total d'atomes du cycle et n' celui d'atomes d'oxygène, de soufre ou/et d'azote. Par exemple 12—C—4 désigne un cycle polyéther à 12 atomes dont 4 atomes d'oxygène, et 8 de carbone.

A titre d'exemples non limitatifs, on peut usiliser des polyéthers macrocycliques tels que:

12—C—4 soit tétra-oxa-1,4,7,10-cyclododécane;
10—C—5 „ penta-oxa-1,4,7,10,13-cyclo-pentadécane;
18—C—6 „ hexa-oxa-1,4,7,10,13,16-cyclo-octadécane;
21—C—7 „ hepta-oxa-1,4,7,10,13,16,19-cyclo-heneicosane.

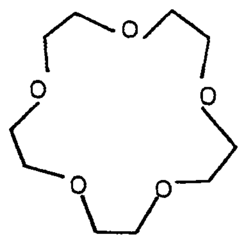

15—C—5

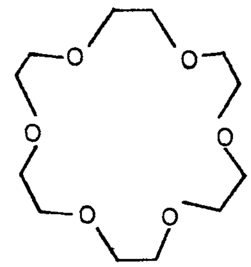

18—C—6

A partir de ces modèles de base, de nombreuses variantes sont possibles; les éthers-couronnes peuvent être substitués par un ou plusieurs groupes benzo ou un groupe naphto eux-mêmes substitués ou non en particulier alkylés. De préférence, on utilise les composés ayant jusqu'à 30 atomes de carbone. A titre d'exemple, on peut citer sans que cette liste soit limitative les éthers macrocycliques suivants:

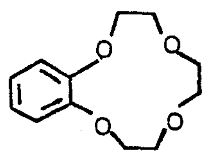

benzo 12—C—4

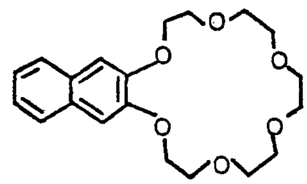

naphto 18—C—6

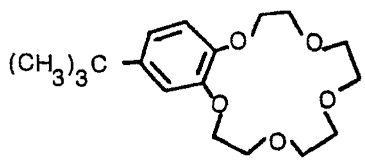

t-butyl-benzo-15—C—5

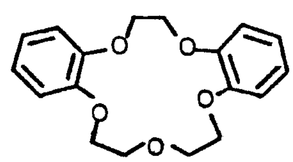

Dibenzo-15—C—5

Ils peuvent être également substitués par un ou plusieurs groupes cyclohexyles ou décalyles qui peuvent être eux-mêmes substitués ou non, en particulier alkylés. A titre d'exemple on peut citer les composés suivants:

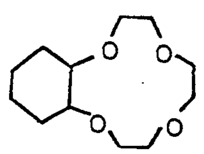

cyclohexyl-12—C—4

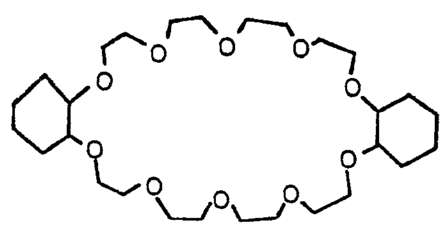

Dicyclohexyl-30—C—10

Ils peuvent encore être substitués par un ou plusieurs restes alkyles, comme, par exemple, dans:

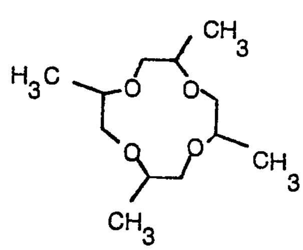

(tétraméthyl-2,4,6,8)12—C—4

Les atomes d'oxygène peuvent être séparés par plus de deux atomes de carbone comme c'est le cas dans les exemples suivants:

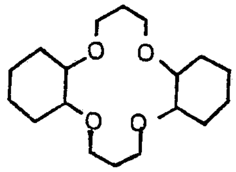

Dicyclohexyl-14—C—4

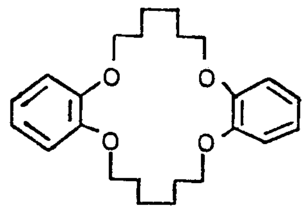

Dibenzo-20—C—4

Dans tous les composés précédemment décrits, on peut remplacer tout ou partie des atomes d'oxygène par des atomes de soufre. A titre d'exemple, et sans que cette liste soit quantitative, on peut citer les macrocycles suivants:

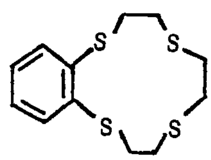

Benzotétrathia-12—C—4

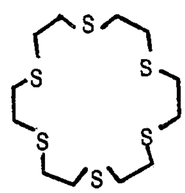

Hexathia-18—C—6

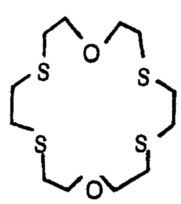

Tétrathia-18—C—6

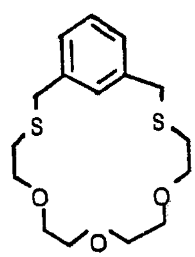

Trioxa-5,8,11 dithia-2,4 métabenzénophénone [5]

Pour que l'effet de l'adjonction de l'éther-couronne, suivant l'invention, se fasse sentir suffisamment, il convient qu'au moins 0,1 mole d'éther cyclique se trouve en présence d'une mole de dérivé stannique renfermant un atome d'étain. De préférence, la proportion est de l'ordre d'au moins 0,5 mole d'éther par atome d'étain. Selon la masse moléculaire de l'éther et de dérivé stannique utilisés, les proportions pondérales de ces deux composés varient généralement entre 10 et 200 parties en poids d'éthers-couronne pour 100 parties de dérivé stannique et, de préférence, entre 25 et 100 parties pour 100.

Bien entendu, l'éther-couronne peut être incorporé à la résine à stabiliser ensemble ou séparément du stabilisant stannique.

Il est à noter également que des stabilisants connus, autres que ceux qui dérivent de l'étain, peuvent être utilisés conjointement avec la composition suivant l'invention. On peut en effet — comme dans le cas des stabilisants classiques — diminuer à la fois la quantité d'étain et celle d'éther couronne nécessaires, en les remplaçant par un dérivé thio-organique moins coûteux.

A titre d'exemple, on peut citer comme tels adjuvants: l'acide thiomalique, les produits de condensation de l'acide thiomalique avec l'éthylène glycol, d'une façon plus générale les acides polycarboxyliques mercapto substitués et leurs produits de condensation avec les polyols, les thioanhydrides de type $R_1COSCOR_2$ dans lesquels $R_1$ et $R_2$ sont des restes alkyles comprenant 6 à 20 atomes de carbone, en particulier l'anhydride de l'acide thiolaurique, les mercapto-acides de formule générale $HS\text{-}(-CH_2-)_nCO_2H$ dans lesquels n = 1 à 11, leurs esters de type $HS\text{-}(-CH_2)_nCO_2R_3$ dans lesquels $R_3$ est un reste alkyle comprenant 1 à 18 atomes de carbone, l'acide o-thiosalicylique, les mercaptans lourds $C_mH_{2m+1}SH$, m étant supérieur ou égal à 12 (ex. laurylmercaptan, stéarylmercaptan), les

mercapto-alcools de type HS $C_pH_{2p}OH$, les sulfures d'alkyle, les sulfures d'aryle, les sulfures comportant un enchaînement

$$-\overset{\overset{O}{\|}}{C}-(CH_2)_2-S-(CH_2)_2-\overset{\overset{O}{\|}}{C}-,$$

les alkylidène bis-(alkylmercaptides) par exemple $(CH_3)_2C(SR_3)_2$ dans lesquels $R_3$ est défini comme ci-dessus, les alkylidène bis-(mercapto esters) de type $(CH_3)_2C\ [S(CH_2)_nCOOR_3)_2$, n et $R_3$ étant définis comme ci-dessus.

Les disulfures $R_3-S-S-R_3$ et les disulfures substitués de type

$$R_3OCO(CH_2)_2-S-S-(CH_2)_2COOR_3,$$

$R_3$ étant défini comme ci-dessus, les thioacétals et les thiocétals, en particulier le thioacétal de la cyclohexanone et du mercapto actétate d'isooctyle et plus généralement les composés de type

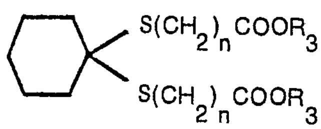

dans lesquels n et $R_3$ sont comme plus haut, les esters lourds du thioglycérol

$$HSCH_2-CHOH-CH_2OCOR_4 \text{ ou } HSCH_2-\underset{\underset{OCOR_4}{|}}{CH}-CH_2OCOR_4,$$

les esters lourds du mercaptoéthanol $R_4CO_2CH_2CH_2SH$ dans lesquels $R_4$ représente un reste hydrocarboné comportant 8 à 20 atomes de carbone, ainsi que les esters de mercaptanéthanol d'amido-acides de type

$$R_5-\underset{\underset{NHCOR_6}{|}}{CH}-COOCH_2CH_2SH$$

$R_5$ et $R_6$ sont des restes hydrocarbonés comportant 1 à 18 atomes de carbone.

Ces produits permettent d'améliorer considérablement le pouvoir stabilisant du système binaire tétramercapto-étain/éther-couronne, tant sous l'aspect contrôle de la couleur que sous celui de la viscosité. Selon les cas, on peut, à stabilisation identique, économiser de 20 à 90% du système binaire nécessaire lorsqu'on l'utilise seul.

L'invention est illustrée par les exemples non limitatifs qui suivent.

Dans les exemples, des échantillons de chlorure de polyvinyl, additionné d'une composition suivant l'invention ou/et d'un autre stabilisant, sont soumis à des essais de coloration au chauffage. Pour cela, on calandre à 185°C sur un mélangeur à rouleaux:

100 parties en poids de chlorure de polyvinyle, connu sous la dénomination commerciale Lacqvyl SO715, de coefficient de viscosité K=56;

0,5 partie de cire E qui constitue le lubrifiant externe usuel (ester de l'acide montanique);

x partie de stabilisant stannique (correspondant à $0{,}48.10^{-3}$ mole) dont les nature et quantité sont indiquées dans chacun des exemples;

y partie d'éther-couronne.

La coloration de la résine est observée dans chaque cas et l'on note le temps en minutes au bout duquel s'est produite la coloration et celui qui correspond au brunissement de l'échantillon.

Le tableau suivant indique les résultats obtenus.

Exemples 1 à 15

voir Tableau à la page 8.

Les exemples 1, 4 et 6 montrent que les tetramercapto-étains seuls sont des mauvais stabilisants: ainsi, avec du tétrakis (palmitoyl oxy-2 éthylthio)étain de l'exemple 1, le brunissement profond a lieu en 7 minutes, mais l'adjonction de l'éther-couronne 18—C—6, c'est-à-dire d'hexaoxa-1,4,7,10,13,16-cyclooctadécane (exemple 2), améliore considérablement la tenue de la résine, le brunissement ne

survenant plus qu'après 20 minutes. Une amélioration semblable est constatée par la comparaison des exemples 4 et 5, 6 et 8 ou 9 et 11.

L'exemple 9 montre l'effet remarquable de l'adjonction simultanée d'un éther-couronne et d'un ester d'éthyl-mercaptan à un tétramercapto-étain: contrairement à l'exemple 6, où ce dernier est employé seul et donne une stabilisation très insuffisante, cette adjonction double selon l'exemple 9, conduit à une résine très stable à chaud, et cela pour des proportions de tétramercapto-étain et d'éther-couronne faibles. L'essai comparatif 15 prouve que l'éther-couronne seul n'exerce aucun effet stabilisant.

Exemple 16

Cet exemple rend compte des effets favorables d'un adjuvant suivant l'invention, sur la viscosité du chlorure de polyvinyle. Les déterminations relatées sont effectuées au moyen de l'appareil Brabender connu, qui est un rhéomètrre à couple de rotation. L'appareil enregistre l'évolution du couple de malaxage de la résine à une température donnée, en fonction du temps (il est décrit, par exemple, dans Plastiques Modernes et Elastomères, Mars 1975).

Les mesures portent sur la résine de chlorure de polyvinyle connue sous la dénomination commerciale S 111 de constante de viscosité K=67. La résine est additionnée de certains agents dans les proportions suivants:

| | |
|---|---|
| Chlorure de polyvinyle | 100 parties en poids |
| $CaCO_3$ | 3 " " " |
| $TiO_2$ | 1 " " " |
| Cire "E" (ester de l'acide montanique) | 0,8 " " " |
| Système stabilisant | 1,65 parties $Sn(SCH_2CO_2\text{-}i.C_8H_{17})_4$<br>1,60 parties éther-couronne 18—C—6 |

On opère à 200°C avec un vitesse de rotation du rotor du malaxeur de 60 t/min.

La courbe de viscosité enregistrée montre l'existence d'un palier très net entre la 4ème et la 13ème minute, à un couple d'environ, 1,2 kg/m, ce qui correspond à des conditions favorables de travail de la matière plastique; on n'observe jamais de palier avec des tétramercaptans d'étain empoyés seuls; d'autre part, avec les stabilisants classiques, dans les mêmes conditions opératoires, on trouve des couples de l'ordre de 1,5 et 1,6 kg/m, et les paliers ne sont pas nets.

TABLEAU

| Exemple N° | % (x ou/ et y) | Stabilisant | Temps en mn jusqu'à l'apparition de la couleur | | | |
|---|---|---|---|---|---|---|
| 1 | 0,45 | $(C_{15}H_{31}COOCH_2CH_2S)_4Sn$ | Jaune clair | 5 | Brun ou Vert foncé | 7 |
| 2 | 0,45<br>+ 0,51 | ″ ″ ″ ″<br>éther-couronne 18—C—6 | ″ ″ | 5—6 | ″ ″ | 20 |
| 3 | 0,3 | $Bu_2Sn(SCH_2CO_2\text{-i.octyle})_2$ | ″ ″ | 2 | ″ ″ | 12 |
| 4 | 0,44 | $(C_{12}H_{25}S)_4Sn$ | ″ ″ | 1 | Noire | 9 |
| 5 | 0,44<br>+ 0,34 | ″ ″<br>éther-couronne 12—C—4 | ″ ″ | 3 | ″ | 14 |
| 6 | 0,45 | $Sn(SCH_2CO_2\text{-i.}C_8H_{17})_4$ | ″ ″ | 4 | Brun foncé | 5 |
| 7 | 0,45<br>+ 0,34 | ″ ″ ″ ″<br>éther-couronne 12—C—4 | ″ ″ | 6 | ″ ″ | 7 |
| 8 | 0,45<br>+ 0,51 | $Sn(SCH_2CO_2\text{-i.}C_8H_{17})_4$<br>éther-couronne 18—C—6 | ″ ″ | 8—9 | ″ ″ | 18 |
| 9 | 0,09<br>+ 0,10<br>+ 1,00 | $Sn(SCH_2CO_2\text{-i.}C_8H_{17})_4$<br>éther-couronne 18—C—6<br>$C_{17}H_{35}COOCH_2CH_2SH$ | ″ ″ | 9—10 | Brun ou Vert foncé | 23 |
| 10 | 1,00 | $C_{17}H_{35}COOCH_2CH_2SH$ (seul) | ″ ″ | <1 | ″ ″ | 3 |
| 11 | 0,09<br>+ 1,00 | $Sn(SCH_2CO_2\text{-i.}C_8H_{17})_4$<br>$C_{17}H_{35}COOCH_2CH_2SH$ | ″ ″ | 8 | ″ ″ | 10 |
| 12 | 0,09<br>+ 0,10 | $Sn(SCH_2CO_2\text{-i.}C_8H_{17})_4$<br>éther-couronne 18—C—6 | ″ ″ | 2 | ″ ″ | 14 |
| 13 | — 0,35 | $(C_8H_{17})_2Sn(SCH_2CO_2\text{-i.}C_8H_{17})_2$ | ″ ″ | 3 | ″ ″ | 12 |
| 14 | 0,1 | $(BuSnO_{1,5})_m$—$(BuSnS_{1,5})_n$ (polymère) | ″ ″ | 8 | ″ ″ | 12 |
| 15 | 0,35 | éther-couronne 18—C—6 seul | ″ ″ | — | ″ ″ | 1 |

**Revendications**

1. Procédé de stabilisation à la chaleur d'une résine, en particulier, halogéno-vinylique, qui consiste à incorporer à la résine un ou plusieurs composés tétramercapto-stanniques et au moins un éther cyclique, caractérisé en ce que ce dernier est un éther-couronne éventuellement substitué, dont au moins 0,1 mole est employée par atome de Sn présent.

2. Procédé suivant la revendication 1, caractérisé en ce que le ou les éthers-couronne ajoutés renferment au moins 8 atomes de carbone et au moins 4 atomes d'oxygène, ce dernier pouvant être en partie ou totalement remplacé par du soufre ou/et de l'azote.

3. Procédé suivant la revendication 1 ou 2, caractérisé en ce que l'éther-couronne est en $C_8$ à $C_{30}$ et renferme 4 à 10 atomes d'oxygène dont un ou plusieurs peuvent être remplacés par des atomes de soufre ou/et d'azote.

4. Procédé suivant une des revendications 1 à 3, caractérisé en ce que le cycle de l'ether-couronne porte un ou deux noyaux benzo ou cyclohexyle, ces noyaux pouvant être alkylés.

5. Procédé suivant une des revendications 1 à 3, caractérisé en ce que de l'éther-couronne porte un groupe naphto.

6. Procédé suivant une des revendications 1 à 5, caractérisé en ce que la proportion d'éther-couronne est au moins 0,5 mole pour chaque atome de Sn du composé tétramercaptostannique présent.

7. Composition stabilisante, pour la réalisation du procédé suivant une des revendications 1 à 6, qui comprend un ou plusieurs composés tétramercapto-stanniques, caractérisée en ce qu'elle renferme un ou plusieurs éthers-couronne, c'est-à-dire des polyéthers cycliques, dont un ou plusieurs atomes d'oxygène peuvent être remplacés par des atomes de soufre ou/et d'azote, ces éther-couronnes étant présents à raison d'au moins 0,1 mole, et de préférence d'au moins 0,5 mole par atome de Sn du tétramercapto-étain.

8. Composition suivant la revendication 7, caractérisée en ce que la proportion pondérale d'éther-couronne est de 10 à 200 parties pour 100 parties de composé tétramercaptostannique, et de préférence de 25 à 100.

9. Composition stabilisante, pour la réalisation du procédé suivant une des revendications 1 à 6, qui comprend un ou plusieurs composés tétramercapto-stanniques, associés à des sulfures organiques, des mercaptans, des thioesters ou d'autres thiodérivés sans étain, caractérisée en ce qu'elle renferme en outre un ou plusieurs éthers-couronne suivant la revendication 7 ou 8.

10. Matière plastique, particulièrement halogéno-vinylique, caractérisée en ce qu'elle est stabilisée à la chaleur par le procédé suivant une des revendications 1 à 6.

**Claims**

1. Process of heat stabilisation of a resin, particularly halo-vinyl, which consists in incorporating into the resin one or more tetramercapto-tin compounds and at least one cyclic ether, characterised in that the latter is a crown compound, substituted if required, at least 0.1 mole of which is employed per Sn atom present.

2. Process according to claim 1, characterised in that the one ore more crown compounds added contain at least 8 carbon atoms and at least 4 oxygen atoms, the latter optionally being partly or wholly replaced by sulphur and/or by nitrogen.

3. Process according to claim 1 or 2, characterised in that the crown compound contains $C_8$ to $C_{30}$ and contains 4 to 10 oxygen atoms, one or more of which can be replaced by sulphur and/or nitrogen atoms.

4. Process according to any of claims 1 to 3, characterised in that the crown compound ring carries one or two benzyl or cyclohexyl rings, which rings can be alkylated.

5. Process according to any of claims 1 to 3, characterised in that the crown compound carries a napthyl group.

6. Process according to any of claims 1 to 5, characterised in that the proportion of crown compound is at least 0.5 mole for each Sn atom of the tetramercapto-tin compound present.

7. Stabilising composition, for carrying out the process according to any of claims 1 to 6, which comprises one or more tetramercapto-tin compounds, characterised in that it contains one or more crown compounds, that is cyclic polyethers one or more oxygen atoms of which can be replaced by sulphur and/or nitrogen atoms, the crown compounds being present in an amount of at least 0.1 mole and preferably at least 0.5 mole per Sn atom of the tetramercapto-tin.

8. Composition according to claim 7, characterised in that the weight proportion of crown compound is 10 to 200 parts per 100 parts of the tetramercapto-tin compound and preferably 25 to 100.

9. Stabilising composition, for carrying out the process according to any of claims 1 to 6, which comprises one or more tetramercapto-tin compounds associated with organic sulphides, mercaptans, thioesters or other thio-derivatives without tin, characterised in that it also contains one or more crown compounds according to claim 7 or 8.

10. Plastics material, particularly halo-vinyl, characterised in that it is stabilised to heat by the process according to any of claims 1 to 6.

**Patentansprüche**

1. Verfahren zur Stabilisierung eines Harzes, insbesondere eines halogenvinylischen, gegen Hitze, bei dem in das harz eine oder mehrere Tetramercaptostanniverbindungen und mindestens ein cyclischer Äther eingearbeitet werden, dadurch gekennzeichnet, dass letzterer ein gegebenenfalls substituierter Kronenäther ist, von dem mindestens 0,1 Mol pro vorhandenes Sn-Atom verwendet wird.

2. Verfahren nach Anspruch 1, dadurch gekennzeichnet, dass der oder die Kronenäther, die zugesetzt werden, mindestens 8 Kohlenstoffatome und mindestens 4 Sauerstoffatome enthalten, wobei letzterer teilweise oder gänzlich durch Schwefel und/oder Stickstoff ersetzt sein kann.

3. Verfahren nach Anspruch 1 oder 2, dadurch gekennzeichnet, dass der Kronenäther $C_8$ bis $C_{30}$ enthält und 4 bis 10 Sauerstoffatome einschliesst, von denen eines oder mehrere durch Schwefel- und/oder Stickstoffatome ersetzt sein können.

4. Verfahren nach einem der Ansprüche 1 bis 3, dadurch gekennzeichnet, dass der Ring des Kronenäthers 1 oder 2 Benzo- oder Cyclohexylringe trägt, wobei diese Ringe alkyliert sein können.

5. Verfahren nach einem der Ansprüche 1 bis 3, dadurch gekennzeichnet, dass der Kronenäther eine Naphthogruppe trägt.

6. Verfahren nach einem der Ansprüche 1 bis 5, dadurch gekennzeichnet, dass der Anteil des Kronenäthers mindestens 0,5 Mol pro jedes Sn-Atom der vorhandenen Tetramercaptostanniverbindung beträgt.

7. Stabilisierende Zusammensetzung zur Durchführung des Verfahrens nach einem der Ansprüche 1 bis 6, enthaltend eine oder mehrere Tetramercaptostanniverbindungen, dadurch gekennzeichnet, dass sie einen oder mehrere Kronenäther enthält, das heisst cyclische Polyäther, von denen ein oder mehrere Sauerstoffatome durch Schwefel- und/oder Stickstoffatome ersetzt sein können, wobei diese Kronenäther in einer Menge von mindestens 0,1 Mol und vorzugsweise von mindestens 0,5 Mol pro Sn-Atom der Tetramercaptozinnverbindung vorhanden sind.

8. Zusammensetzung nach Anspruch 7, dadurch gekennzeichnet, dass der Gewichtsanteil des Kronenäthers 10 bis 200 Teile pro 100 Teile der Tetramercaptostanniverbindung und vorzugsweise 25 bis 100 beträgt.

9. Stabilisierende Zusammensetzung zur Durchführung des Verfahrens gemäss einem der Ansprüche 1 bis 6, enthaltend eine oder mehrere Tetramercaptostanniverbindungen, assoziiert an organische Sulfide, Mercaptane, Thioester oder andere Thioderivate ohne Zinn, dadurch gekennzeichnet, dass sie ausserdem einen oder mehrere Kronenäther nach Anspruch 7 oder 8 enthält.

10. Plastisches Material, insbesondere halogenvinylisches, dadurch gekennzeichnet, dass es nach dem Verfahren gemäss einem der Ansprüche 1 bis 6 gegen Hitze stabilisiert ist.